(19) Europäisches Patentamt
European Patent Office
Office européen des brevets

(11) EP 1 162 682 A1

(12) **EUROPÄISCHE PATENTANMELDUNG**

(43) Veröffentlichungstag:
**12.12.2001 Patentblatt 2001/50**

(51) Int Cl.7: **H01M 10/40**

(21) Anmeldenummer: **01111125.9**

(22) Anmeldetag: **09.05.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **07.06.2000 DE 10027626**

(71) Anmelder: **MERCK PATENT GmbH**
**64293 Darmstadt (DE)**

(72) Erfinder:
- **Schmidt, Michael**
  **64342 Seeheim-Jugenheim (DE)**
- **Kühner, Andreas**
  **64289 Darmstadt (DE)**
- **Petigk, Dagmar**
  **65428 Rüsselsheim (DE)**

(54) **Silanverbindungen als Additive in Elektrolyten für elektrochemische Zellen**

(57) Die Erfindung betrifft die Anwendung von Silanverbindungen als Additive in Elektrolyten zur Verbesserung der Eigenschaften elektrochemischer Zellen.

EP 1 162 682 A1

## Beschreibung

Die Erfindung betrifft die Anwendung von Silanverbindungen als Additive in Elektrolyten zur Verbesserung der Eigenschaften elektrochemischer Zellen.

Lithium-Ionen-Batterien gehören zu den aussichtsreichsten Systemen für mobile Anwendungen. Die Einsatzgebiete reichen dabei von hochwertigen Elektronikgeräten (z.B. Mobiltelefone, Camcorder) bis hin zu Batterien für Kraftfahrzeuge mit Elektroantrieb.

Diese Batterien bestehen aus Kathode, Anode, Separator und einem nichtwäßrigen Elektrolyt. Als Kathode werden typischerweise $Li(MnMe_z)_2O_4$, $Li(CoMe_z)O_2$, $Li(CoNi_xMe_z)O_2$ oder andere Lithium-Interkalations und Insertions-Verbindungen verwendet. Anoden können aus Lithium-Metall, Kohlenstoffen, Graphit, graphitischen Kohlenstoffen oder andere Lithium-Interkalations und Insertions-Verbindungen oder Legierungsverbindungen bestehen. Als Elektrolyt werden Lösungen mit Lithiumsalzen wie $LiPF_6$, $LiBF_4$, $LiClO_4$, $LiAsF_6$, $LiCF_3SO_3$, $LiN(CF_3SO_2)_2$ oder $LiC(CF_3SO_2)_3$ und deren Mischungen in aprotischen Lösungsmitteln verwendet.

Aufgrund der Empfindlichkeit gegenüber Wasser und anderen protischen Verunreinigungen des in Lithium-Ionen-Batterien häufig eingesetzten Leitsalzes $LiPF_6$ besitzen diese Elektrolyte immer einen meßbaren Gehalt an Flußsäure. Hinzu kommt ein herstellungsbedingter HF-Gehalt von mind. 50 ppm im Elektrolyten. Außerdem kann durch thermische Belastung des Systems HF gebildet werden. Die gebildete Flußsäure reagiert leicht mit den verschiedenen Komponenten der Batterie.

Auf Graphitelektroden befinden sich üblicherweise Deckschichten aus Alkylcarbonaten, Lithiumcarbonaten, Lithiumhydroxiden und Lithiumoxiden. Die Flußsäure reagiert mit dieser Deckschicht. In Elektrolyten, die $LiPF_6$ als Leitsalz enthalten, konnte gezeigt werden, daß die Impedanz der Batterie ständig zunimmt. Dies auf den Abbau der Carbonat-Deckschicht und den Aufbau eines LiF-Film zurückzuführen.

HF reagiert mit der Deckschicht gemäß folgender Gleichungen:

$$Li_2CO_3 + 2HF \rightarrow 2LiF + H_2CO_3$$

$$LiOH + HF \rightarrow LiF + H_2O$$

$$Li_2O + 2HF \rightarrow 2LiF + H_2O$$

Im Gegensatz zu der ursprünglichen Deckschicht ist der LiF-haltige Film nicht oder nur sehr schlecht Li-Ionen durchlässig.

Stand der Technik ist die Zugabe von Additiven, die HF abfangen und damit die Bildung des LiF-Films verhindern sollen.

Eine Vielzahl von Additiven wird zur Anwendung in Lithium-Ionen-Batterien in der Literatur erwähnt. So wird zum Beispiel Tributylamin als HF-Fänger eingesetzt. Dieses Additiv senkt den HF-Gehalt sehr effektiv, jedoch ist es elektrochemisch nicht oxidationsstabil. Es wird ab ca. 3,5 V gegen $Li/Li^+$ irreversibel zersetzt.

In JP 08321311 werden als Additive verschiedene Acetate und Oxalate sowie Silane zugesetzt. Damit wird eine Beschichtung auf der Anode gebildet, die die Reaktionen zwischen Elektrolyt und Anode verhindern soll.

Im Gegensatz zum Stand der Technik soll nun nicht versucht werden HF aus dem Elektrolyten zu entfernen oder einen neuen Film aufzubauen. Der neue Ansatzpunkt geht vielmehr davon aus, gebildetes Lithiumfluorid zu lösen und somit die Impedanz der Batterie zu stabilisieren.

Aufgabe der vorliegenden Erfindung ist es deshalb, Additive zur Verfügung zu stellen, die der Filmbildung auf den Elektroden entgegenwirken und eine ausreichend hohe elektrochemische Stabilität aufweisen.

Die erfindungsgemäße Aufgabe wird gelöst durch den Einsatz von Verbindungen folgender Formel:

$$SiR^1R^2R^3R^4$$

worin

$R^1$-$R^4$ H, $C_yF_{2y+1-z}H_z$, $OC_yF_{2y+1-z}H_z$, $OC(O)C_yF_{2y+1-z}H_z$, $OSO_2C_yF_{2y+1-z}H_z$

mit $1 \leq x < 6$, $1 \leq y \leq 8$ und $0 \leq z \leq 2y+1$ und
$R^1$-$R^4$ gleich oder verschieden

die Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, hat oder

die Bedeutung eines heterocyclischen aromatischen Rings aus der Gruppe Pyridyl, Pyrazyl oder Pyrimidyl hat, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können, als Additiv. Die Silanverbindungen werden als Additive in Elektrolyten, bestehend aus einem in aprotischen Lösungsmitteln gelösten lithiumhaltigen anorganischen Leitsalz oder lithiumhaltigen organischen Leitsalz, eingesetzt.

Die Silanverbindungen sind in Elektrolyten, die üblicherweise in elektrochemischen Zellen, bevorzugt in nichtwässrigen sekundären Lithiumbatterien, eingesetzt werden, gelöst.

Es wurde gefunden, daß vierfach koordinierte Silanverbindungen, insbesondere Tetramethoxysilan, Ethyltriacetoxysilan, Diphenylmethoxysilan, Difluordiphenylsilan und Triethylsilylfluormethansulfonat, geeignete Additive für elektrochemische Zellen sind.

Überraschend wurde gefunden, daß Silanverbindungen LiF bis hin zu hohen Konzentrationen in organischen aprotischen Lösungsmitteln lösen können. Mit den erfindungsgemäßen Additiven kann die Ausbildung eines LiF-Films auf den Elektroden verhindert werden. Damit kann die Impedanz der Batterie stabilisiert werden.

Die Additive zeichnen sich durch eine gute elektrochemische Stabilität aus. Es wurde gefunden, daß die Oxidationsstabilität der Silanverbindungen ausreichend hoch für den Einsatz in elektrochemischen Zellen, bevorzugt in Lithium-Ionen-Batterien, ist.

Die Silanverbindungen können in Elektrolyten mit herkömmlichen Leitsalzen verwendet werden. Geeignet sind z.B. Leitsalze ausgewählt aus der Gruppe $LiPF_6$, $LiBF_4$, $LiClO_4$, $LiAsF_6$, $LiCF_3SO_3$, $LiN(CF_3SO_2)_2$, $LiN(CF_3CF_2SO_2)_2$ oder $LiC(CF_3SO_2)_3$ und deren Mischungen.

Die Elektrolyte können auch organische Isocyanate (DE 199 44 603) zur Herabsetzung des Wassergehaltes enthalten.

Auch Verbindungen der allgemeinen Formel

$$[([R^1(CR^2R^3)_k]_lA_x)_yKt]^+ \quad {}^-N(CF_3)_2$$

wobei

Kt N, P, As, Sb, S, Se

A N, P, P(O), O, S, S(O), $SO_2$, As, As(O), Sb, Sb(O)

$R^1$, $R^2$ und $R^3$

gleich oder verschieden

H, Halogen, substituiertes und/oder unsubstituiertes Alkyl $C_nH_{2n+1}$, substituiertes und/oder unsubstituiertes Alkenyl mit 1-18 Kohlenstoffatomen und einer oder mehreren Doppelbindungen, substituiertes und/oder unsubstituiertes Alkinyl mit 1-18 Kohlenstoffatomen und einer oder mehreren Dreifachbindungen, substituiertes und/oder unsubstituiertes Cycloalkyl $C_mH_{2m-1}$, ein- oder mehrfach substituiertes und/oder unsubstituiertes Phenyl, substituiertes und/oder unsubstituiertes Heteroaryl,

A kann in verschiedenen Stellungen in $R^1$, $R^2$ und/oder $R^3$ eingeschlossen sein,

Kt kann in cyclischen oder heterocyclischen Ring eingeschlossen sein,

die an Kt gebundenen Gruppen können gleich oder verschieden sein

mit

n 1-18

m 3-7

k 0, 1-6

l 1 oder 2 im Fall von x=1 und 1 im Fall x=0

x 0,1

y 1-4

bedeuten, können enthalten sein (DE 9941566). Das Verfahren zur Herstellung der Verbindungen ist dadurch gekennzeichnet, daß ein Alkalisalz der allgemeinen Formel

$$D^{+}\ {}^{-}N(CF_3)_2$$

mit $D^+$ ausgewählt aus der Gruppe der Alkalimetalle in einem polaren organischen Lösungsmittel mit einem Salz der allgemeinen Formel

$$[([R^1(CR^2R^3)_k]_lA_x)_yKt]^+ \quad {}^-E$$

wobei
Kt, A, $R^1$, $R^2$, $R^3$, k, l, x und y die oben angegebene Bedeutung haben und
$^-E$ $F^-$, $Cl^-$, $Br^-$, $I^-$, $BF_4^-$, $ClO_4^-$, $AsF_6^-$, $SbF_6^-$ oder $PF_6^-$
bedeutet, umgesetzt wird.

Die erfindungsgemäßen Verbindungen können auch in Elektrolyten enthalten sein, die Verbindungen der Formel

$$X\text{-}(CYZ)_m\text{-}SO_2N(CR^1R^2R^3)_2$$

mit

| | |
|---|---|
| X | H, F, Cl, $C_nF_{2n+1}$, $C_nF_{2n-1}$, $(SO_2)_kN(CR^1R^2R^3)_2$ |
| Y | H, F, Cl |
| Z | H, F, Cl |
| $R^1$, $R^2$, $R^3$ | H und/oder Alkyl, Fluoralkyl, Cycloalkyl |
| m | 0-9 und falls X=H, $m \neq 0$ |
| n | 1-9 |
| k | 0, falls m=0 und k=1, falls m=1-9 |

enthalten, dagestellt dadurch, daß teil- oder perfluorierte Alkysulfonylfluoride mit Dimethylamin in organischen Lösungsmitteln umgesetzt werden (DE 199 466 73).

Auch Elektrolyte mit Komplexsalzen der allgemeinen Formel (DE 199 51 804)

$$M^{x+}[EZ]^{y-}_{x/y}$$

worin bedeuten:

x,y 1,2,3,4,5,6
$M^{x+}$ ein Metallion

E eine Lewis-Säure, ausgewählt aus der Gruppe
$BR^1R^2R^3$, $AlR^1R^2R^3$, $PR^1R^2R^3R^4R^5$, $AsR^1R^2R^3R^4R^5$, $VR^1R^2R^3R^4R^5$, $R^1$ bis $R^5$ gleich oder verschieden, gegebenenfalls durch eine Einfach- oder Doppelbildung direkt miteinander verbunden sind, jeweils einzeln oder gemeinsam die Bedeutung
eines Halogens (F, Cl, Br),
eines Alkyl- oder Alkoxyrestes ($C_1$ bis $C_8$) der teilweise oder vollständig durch F, Cl, Br substituiert sein kann,
eines, gegebenenfalls über Sauerstoff gebundenen aromatischen Rings aus der Gruppe Phenyl, Naphthyl, Anthracenyl

oder Phenanthrenyl, der unsubstituiert oder ein- bis sechsfach durch Alkyl ($C_1$ bis $C_8$) oder F, Cl, Br substituiert sein kann
eines, gegebenenfalls über Sauerstoff gebundenen aromatischen heterocyclischen Rings aus der Gruppe Pyridyl, Pyrazyl oder Pyrimidyl, der unsubstituiert oder ein- bis vierfach durch Alkyl ($C_1$ bis $C_8$) oder F, Cl, Br substituiert sein kann, haben können und
Z $OR^6$, $NR^6R^7$, $CR^6R^7R^8$, $OSO_2R^6$, $N(SO_2R^6)(SO_2R^7)$,
$C(SO_2R^6)(SO_2R^7)(SO_2R^8)$, $OCOR^6$, wobei
$R^6$ bis $R^8$ gleich oder verschieden sind, gegebenenfalls durch eine Einfach- oder Doppelbindung direkt miteinander verbunden sind, jeweils einzeln oder gemeinsam die Bedeutung
eines Wasserstoffs oder die Bedeutung wie $R^1$ bis $R^5$ haben, hergestellt durch Umsetzung von einem entsprechenden Bor- oder Phosphor-Lewis-Säure-Solvenz-Adukt mit einem Lithium- oder Tetraalkylammonium-Imid, -Methanid oder -Triflat, können verwendet werden.

Auch Boratsalze (DE 199 59 722) der allgemeinen Formel

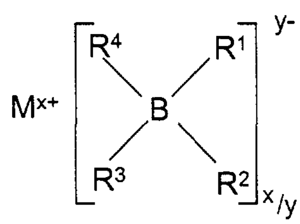

worin bedeuten:

M ein Metallion oder Tetraalkylammoniumion

x,y 1, 2, 3, 4, 5 oder 6

$R^1$ bis $R^4$ gleich oder verschieden, gegebenenfalls durch eine Einfach- oder Doppelbindung direkt miteinander verbundener Alkoxy-oder Carboxyreste ($C_1$-$C_8$) können enthalten sein. Hergestellt werden diese Boratsalze durch Umsetzung von Lithiumtetraalkoholatborat oder einem 1:1 Gemisch aus Lithiumalkoholat mit einem Borsäureester in einem aprotischen Lösungsmittel mit einer geeigneten Hydroxyl- oder Carboxylverbindung im Verhältnis 2:1 oder 4:1.

Die erfindungsgemäßen Verbindungen können auch in Elektrolyte eingesetzt werden, die Lithiumfluoralkylphosphate der folgenden Formel enthalten,

$$Li^+[PF_x(C_yF_{2y+1-z}H_z)_{6-x}]^-$$

worin

$1 \leq x \leq 5$

$3 \leq y \leq 8$

$0 \leq z \leq 2y + 1$

bedeuten und die Liganden ($C_yF_{2y+1-z}H_z$) gleich oder verschieden sein können, wobei die Verbindungen der allgemeinen Formel,

$$Li^+[PF_a(CH_bF_c(CF_3)_d)_e]^-$$

in der a eine ganze Zahl von 2 bis 5, b = 0 oder 1, c = 0 oder 1, d = 2 und
e eine ganze Zahl von 1 bis 4 bedeuten, mit den Bedingungen, daß b und c nicht gleichzeitig jeweils = 0 bedeuten und die Summe aus a + e gleich 6 ist und die Liganden ($CH_bF_c(CF_3)_d$) gleich oder verschieden sein können, ausgenommen sind (DE 100 089 55). Das Verfahren zur Herstellung von Lithiumfluoralkylphosphaten ist dadurch gekennzeichnet, daß wenigstens eine Verbindung der allgemeinen Formel

$$H_mP(C_nH_{2n+1})_{3-m},$$

$$OP(C_nH_{2n+1})_3,$$

$$Cl_mP(C_nH_{2n+1})_{3-m},$$

$$F_mP(C_nH_{2n+1})_{3-m},$$

$$Cl_oP(C_nH_{2n+1})_{5-o},$$

$$F_oP(C_nH_{2n+1})_{5-o},$$

in denen jeweils
$0 < m < 2$, $3 < n < 8$ und $0 < o < 4$ bedeutet
durch Elektrolyse in Fluorwasserstoff fluoriert wird, das so erhaltene Gemisch der Fluorierungsprodukte durch Extraktion, Phasentrennung und/oder Destillation aufgetrennt wird, und das so erhaltene fluorierte Alkylphosphoran in einem aprotischen Lösungsmittel oder Lösungsmittelgemisch unter Feuchtigkeitsausschluß mit Lithiumfluorid umgesetzt wird, und das so erhaltene Salz nach den üblichen Methoden gereinigt und isoliert wird.

Die erfindungsgemäßen Verbindungen können auch in Elektrolyten eingesetzt werden, die Salze der Formel

$$Li[P(OR^1)_a(OR^2)_b(OR^3)_c(OR^4)_dF_e]$$

worin $0 < a+b+c+d \leq 5$ und $a+b+c+d+e=6$ gilt, und $R^1$ bis $R^4$ unabhängig voneinander Alkyl-, Aryl- oder Heteroarylreste sind, wobei mindestens zwei von $R^1$ bis $R^4$ durch eine Einfach- oder Doppelbindung direkt miteinander verbunden sein können, enthalten (DE 100 16 801). Dargestellt werden die Verbindungen durch Umsetzung von Phosphor (V)-Verbindungen der allgemeinen Formel

$$P(OR^1)_a(OR^2)_b(OR^3)_c(OR^4)_dF_e$$

worin $0 < a+b+c+d \leq 5$ und $a+b+c+d+e=5$ gilt, und $R^1$ bis $R^4$ die oben angegebenen Bedeutungen haben mit Lithiumfluorid in Gegenwart eines organischen Lösungsmittels.

Auch Ionische Flüssigkeiten der allgemeinen Formel

$$K^+A^-$$

worin bedeuten:

$K^+$ ein Kation ausgewählt aus der Gruppe

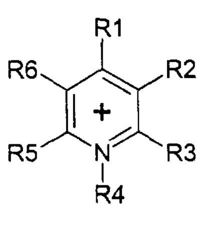

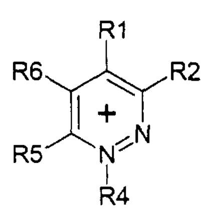

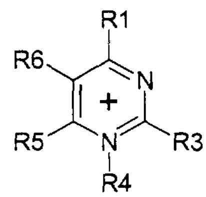

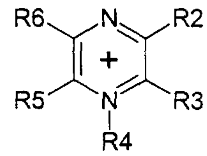

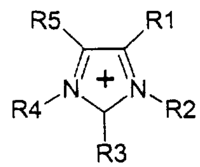

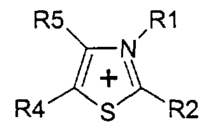

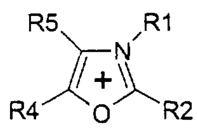

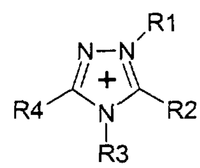

wobei $R^1$ bis $R^5$ gleich oder verschieden, gegebenenfalls durch eine Einfach- oder Doppelbindung direkt miteinander verbunden sind und jeweils einzeln oder gemeinsam folgende Bedeutung haben:

- H,

- Halogen,
- Alkylrest ($C_1$ bis $C_8$) der teilweise oder vollständig durch weitere Gruppen, vorzugsweise F, Cl, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit 1<n<6 und 0<x≤13 substituiert sein kann

und

$A^-$ ein Anion ausgewählt aus der Gruppe

$$[B(OR^1)_n(OR^2)_m(OR^3)_o(OR^4)_p]^-$$

mit 0≤n, m, o, p≤4 und

$$m+n+o+p=4$$

wobei $R^1$ bis $R^4$ verschieden oder paarweise gleich sind, gegebenenfalls durch eine Einfach- oder Doppelbildung direkt miteinander verbunden sind, jeweils einzeln oder gemeinsam
die Bedeutung eines aromatischen Rings aus der Gruppe Phenyl, Naphthyl, Anthracenyl oder Phenanthrenyl, der unsubstituiert oder ein- oder mehrfach durch $C_nF_{(2n+1-x)}H_x$ mit 1<n<6 und 0<x≤13 oder Halogen (F, Cl, Br) substituiert sein kann, besitzen,
die Bedeutung eines aromatischen heterocyclischen Rings aus der Gruppe Pyridyl, Pyrazyl oder Pyrimidyl, der unsubstituiert oder ein-oder mehrfach durch $C_nF_{(2n+1-x)}H_x$ mit 1<n<6 und 0<x≤13 oder Halogen oder Halogen (F, Cl, Br) substituiert sein kann, besitzen,
die Bedeutung eines Alkylrests ($C_1$ bis $C_8$) der teilweise oder vollständig durch weitere Gruppen, vorzugsweise F, Cl,,

$N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1<n<6$ und $0<x\leq13$ substituiert sein kann, besitzen,
beziehungsweise $OR^1$ bis $OR^4$
einzeln oder gemeinsam die Bedeutung eines aromatischen oder aliphatischen Carboxyl-, Dicarboxyl-, Oxysulfonyl- oder Oxycarboxylrests, der teilweise oder vollständig durch weitere Gruppen, vorzugsweise F, Cl,, $N(C_nF_{(2n+1-x)}H_x)_2$, $O(C_nF_{(2n+1-x)}H_x)$, $SO_2(C_nF_{(2n+1-x)}H_x)$, $C_nF_{(2n+1-x)}H_x$ mit $1<n<6$ und $0<x\leq13$ substituiert sein kann, besitzen (DE 100 265 65), können im Elektrolyten enthalten sein. Auch Ionische Flüssigkeiten $K^+A^-$ mit $K^+$ definiert wie oben und

$A^-$ ein Anion ausgewählt aus der Gruppe

$$\left[ PF_x(C_yF_{2y+1-z}H_z)_{6-x} \right]^-$$

und

$1\leq x<6$
$1 \leq y \leq 8$ und
$0\leq z \leq 2y+1$

können enthalten sein (DE 100 279 95).

Die erfindungsgemäßen Verbindungen können auch in Elektrolyten enthalten sein mit Verbindungen folgender Formel:

$$NR^1R^2R^3$$

worin
$R^1$ und $R^2$ H, $C_yF_{2y+1-z}H_z$ oder $(C_nF_{2n-m}H_m)X$, wobei X ein aromatischer oder heterozyklischer Rest ist, bedeuten und $R^3$ $(C_nF_{2n-m}H_m)Y$, wobei Y ein heterozyklischer Rest ist, oder $(C_oF_{2o-p}H_p)Z$, wobei Z ein aromatischer Rest ist, bedeutet, und wobei n, m, o, p, y und z die folgenden Bedingungen erfüllen:

$0 \leq n \leq 6$,
$0 \leq m \leq 2n$,
$2 \leq o \leq 6$,
$0 \leq p \leq 2o$,
$1 \leq y \leq 8$ und
$0 \leq z \leq 2y+1$,

zur Verringerung des Säuregehalts in aprotischen Elektrolytsystemen in elektrochemischen Zellen.

Auch Fluoralkylphosphate der allgemeinen Formel

$$M^{n+}[PF_x(C_yF_{2y+1-z}H_z)_{6-x}]_n^-$$

worin

$1 \leq x \leq 6$
$1 \leq y \leq 8$
$0 \leq z \leq 2y + 1$
$1 \leq n \leq 3$ und

$M^{n+}$ die Bedeutung eines ein- bis dreiwertigen Kations besitzt, insbesondere:

$$NR^1R^2R^3R^4,$$

$$PR^1R^2R^3R^4,$$

$$P(NR^1R^2)_kR^3{}_mR^4{}_{4-k-m} \text{ (mit k=1-4, m=0-3 und k+m}\leq 4),$$

$$C(NR^1R^2)(NR^3R^4)(NR^5R^6),$$

$C(Aryl)_3$, Rb oder Tropylium
mit $R^1$ bis $R^8$ H, Alkyl und Aryl ($C_1$-$C_8$) die teilweise durch F, Cl oder Br substituiert sein können,
wobei $M^{n+}$ = $Li^+$, $Na^+$, $Cs^+$, $K^+$ und $Ag^+$ ausgenommen sind, können enthalten sein. Diese Fluoralkylphosphate sind erhältlich indem Phosphorane mit einem Fluorid oder Metallfluoralkylphosphate mit einem Fluorid oder Chlorid in organischen aprotischen Lösungsmitteln umgesetzt werden (DE 100 388 58).

Der Elektrolyt kann auch ein Gemisch enthalten, daß

a) wenigstens ein Lithiumfluoroalkylphosphat-Salz der allgemeinen Formel

$$Li^+ [PF_x(C_yF_{2y+1-z}H_z)_{6-x}]^-$$

worin

$1 \leq x \leq 5$
$1 \leq y \leq 8$ und
$0 \leq z \leq 2y + 1$

bedeuten und die Liganden ($C_yF_{2y+1-z}H_z$) jeweils gleich oder verschieden sind und
b) wenigstens ein Polymeres (DE 100 58 264) enthält.

Im Elektrolyten können auch Tetrakisfluoroalkylborat-Salze der allgemeinen Formel

$$M^{n+} ([BR_4]^-)_n$$

worin
$M^{n+}$ ein einwertiges, zweiwertiges oder dreiwertiges Kation ist,
die Liganden R jeweils gleich sind und für ($C_xF_{2x+1}$) mit $1 \leq x \leq 8$ stehen
und n = 1, 2 oder 3 ist (DE 100 558 11) enthalten sein. Das Verfahren zur Herstellung von Tetrakisfluoroalkylborat-Salzen ist dadurch gekennzeichnet, daß wenigstens eine Verbindung der allgemeinen Formel $M^{n+}$ $([B(CN)_4]^-)_n$ worin $M^{n+}$ und n die oben angegebene Bedeutung haben, durch Umsetzung mit wenigstens einem Fluorierungsmittel in wenigstens einem Lösungsmittel fluoriert und die so erhaltene fluorierte Verbindung nach den üblichen Methoden gereinigt und isoliert wird.

Der Elektrolyt kann auch Boratsalze der allgemeinen Formel

$$M^{n+} [BF_x(C_yF_{2y+1-z}H_z)_{4-x}]_n^-$$

enthalten, worin bedeuten:
$1<x<3$, $1 \leq y \leq 8$ und $0 \leq z \leq 2y+1$ und

M ein- bis dreiwertiges Kation ($1 \leq n \leq 3$), außer Kalium und Barium,

insbesondere:

Li,
$NR^1R^2R^3R^4$, $PR^5R^6R^7R^8$, $P(NR^5R^6)_kR^7{}_mR^8{}_{4-k-m}$ (mit k=1-4, m=0-3 und k+m≤4) oder
$C(NR^5R^6)(NR^7R^8)(NR^9R^{10})$, wobei

$R^1$ bis $R^4$ $C_yF_{2y+1-z}H_z$ und
$R^5$ bis $R^{10}$ H oder $C_yF_{2y+1-z}H_z$ oder

ein aromatisches heterozyklisches Kation, insbesondere Stickstoff-und/oder Sauerstoff- und/oder Schwefelhaltige aromatische heterozyklische Kationen (DE 101 031 89). Das Verfahren zur Herstellung dieser Verbindungen ist dadurch gekennzeichnet, daß

a) $BF_3$-Lösungsmittel-Komplexe 1:1 mit Alkyllithium unter Kühlung umgesetzt werden, nach langsamer Erwärmung das Lösungsmittel zu einem Großteil entfernt und anschließend der Feststoff abfiltriert und mit einem geeigneten Lösungsmittel gewaschen wird, oder

b) Lithiumsalze in einem geeigneten Lösungsmittel 1:1 mit $B(CF_3)F_3$-salzen umgesetzt werden, bei erhöhter Temperatur gerührt und nach Entfernen des Lösungsmittels das Reaktionsgemisch mit aprotischen nichtwäßrigen Lösungsmitteln, vorzugsweise mit Lösungsmitteln die in elektrochemischen Zellen verwendet werden, versetzt und getrocknet wird, oder

c) $B(CF_3)F_3$-salze 1:1 bis 1:1,5 mit Lithiumsalzen in Wasser bei erhöhter Temperatur umgesetzt und 0,5 bis 2 Stunden am Siedepunkt erhitzt werden, das Wasser entfernt und das Reaktionsgemisch mit aprotischen nichtwäßrigen Lösungsmitteln, vorzugsweise mit Lösungsmitteln die in elektrochemischen Zellen verwendet werden, versetzt getrocknet wird.

Im Elektrolyten können auch Fluoroalkylphosphat-Salze der allgemeinen Formel

$$M^{n+} ([PF_x(C_yF_{2y+1-z}H_z)_{6-x}]^-)_n$$

enthalten sein, worin
$M^{n+}$ ein einwertiges, zweiwertiges oder dreiwertiges Kation ist,

$1 \leq x \leq 5$,

$1 \leq y \leq 8$ und

$0 \leq z \leq 2y + 1$ sind, n = 1, 2 oder 3 bedeuten und die Liganden ($C_yF_{2y+1-z}H_z$) jeweils gleich oder verschieden sind, wobei die Fluoroalkylphosphat-Salze, in denen $M^{n+}$ ein Lithium-Kation ist, sowie die Salze

$M^+([PF_4(CF_3)_2]^-)$ mit $M^+ = Cs^+$, $Ag^+$ oder $K^+$,

$M^+([PF_4(C_2F_5)_2]^-)$ mit $M^+ = Cs^+$,

$M^+([PF_3(C_2F_5)_3]^-)$ mit $M^+ = Cs^+$, $K^+$, $Na^+$ oder para-$Cl(C_6H_4)N_2^+$,

$M^+([PF_3(C_3F_7)_3]^-)$ mit $M^+ = Cs^+$, $K^+$, $Na^+$, para-$Cl(C_6H_4)N_2^+$ oder para-$O_2N(C_6H_4)N_2^+$, ausgenommen sind (DE 100 558 12). Das Verfahren zur Herstellung dieser Fluoroalkylphosphat-Salze ist dadurch gekennzeichnet, daß wenigstens eine Verbindung der allgemeinen Formel

$H_rP(C_sH_{2s+1})_{3-r}$,

$OP(C_sH_{2s+1})_3$,

$Cl_rP(C_sH_{2s+1})_{3-r}$,

$F_rP(C_sH_{2s+1})_{3-r}$,

$Cl_tP(C_sH_{2s+1})_{5-t}$ und/oder

$F_tP(C_sH_{2s+1})_{5-t}$,

in denen jeweils

$0 \leq r \leq 2$

$3 \leq s \leq 8$ und

$0 \leq t \leq 4$

bedeuten, durch Elektrolyse in Fluorwasserstoff fluoriert wird, das so erhaltene Gemisch der Fluorierungsprodukte aufgetrennt wird und das so erhaltene fluorierte Alkylphosphoran in einem aprotischen Lösungsmittel oder Lösungsmittelgemisch unter Feuchtigkeitsausschluß mit einer Verbindung der allgemeinen Formel $M^{n+}(F^-)_n$ worin $M^{n+}$ und n die oben angegebene Bedeutung haben, umgesetzt wird, und das so erhaltene Fluoroalkylphosphat-Salz nach den üblichen Methoden gereinigt und isoliert wird.

Die erfindungsgemäßen Verbindungen können in Elektrolyte für elektrochemische Zellen eingesetzt werden, die Anodenmaterial, bestehend aus beschichteten Metallkernen, ausgewählt aus der Gruppe Sb, Bi, Cd, In, Pb, Ga und Zinn oder deren Legierungen, enthalten (DE 100 16 024). Das Verfahren zur Herstellung dieses Anodenmaterials ist dadurch gekennzeichnet, daß

a) eine Suspension oder ein Sol des Metall- oder Legierungskerns in Urotropin hergestellt wird,

b) die Suspension mit Kohlenwasserstoffen mit $C_5$-$C_{12}$ emulgiert werden,

c) die Emulsion auf die Metall- oder Legierungskerne aufgefällt werden und

d) durch Temperung des Systems die Metallhydroxide bzw.-oxihydroxide in das entsprechende Oxid übergeführt werden.

Die erfindungsgemäßen Verbindungen können auch in Elektrolyte für elektrochemische Zellen eingesetzt werden, mit Kathoden aus gängigen Lithium-Interkalations und Insertionsverbindungen aber auch mit Kathodenmaterialien, die aus Lithium-Mischoxid-Partikel bestehen, die mit einem oder mehreren Metalloxiden (DE 199 22 522) beschichtet sind. Sie können auch aus Lithium-Mischoxid-Partikel bestehen, die mit einem oder mehreren Polymeren (DE 199 46 066) beschichtet sind, erhalten durch ein Verfahren, bei dem die Partikel in einem Lösungsmittel suspendiert werden und anschließend die beschichteten Partikel abfiltriert, getrocknet und gegebenenfalls calciniert werden. Ebenso können die erfindungsgemäßen Verbindungen in Systemen mit Kathoden eingesetzt werden, die aus Lithium-Mischoxid-Partikeln bestehen, die mit Alkalimetallverbindungen und Metalloxiden ein- oder mehrfach beschichtet sind (DE 100 14 884). Das Verfahren zur Herstellung dieser Materialien ist dadurch gekennzeichnet, daß die Partikel in einem organischen Lösungsmittel suspendiert werden, eine Alkalimetallsalzverbindung suspendiert in einem organischen Lösungsmittel zugegeben wird, Metalloxide gelöst in einem organischen Lösungsmittel zugegeben werden, die Suspension mit einer Hydrolyselösung versetzt wird und anschließend die beschichteten Partikel abfiltriert, getrocknet und calciniert werden. Ebenso können die erfindungsgemäßen Verbindungen in Systemen eingesetzt werden, die Anodenmaterialien mit dotiertem Zinnoxid enthalten (DE 100 257 61). Dieses Anodenmaterial wird hergestellt indem

a) eine Zinnchlorid-Lösung mit Harnstoff versetzt wird,

b) die Lösung mit Urotropin und einer geeigneten Dotierverbindung versetzt wird,

c) das so erhaltene Sol in Petrolether emulgiert wird,

d) das erhaltene Gel gewaschen und das Lösungsmittel abgesaugt sowie

e) das Gel getrocknet und getempert wird.

Ebenso können die erfindungsgemäßen Verbindungen in Systemen eingesetzt werden, die Anodenmaterialien mit reduziertem Zinnoxid enthalten (DE 100 257 62). Dieses Anodenmaterial wird hergestellt indem

a) eine Zinnchlorid-Lösung mit Harnstoff versetzt wird,

b) die Lösung mit Urotropin versetzt wird,

c) das so erhaltene Sol in Petrolether emulgiert wird,

d) das erhaltene Gel gewaschen und das Lösungsmittel abgesaugt wird,

e) das Gel getrocknet und getempert wird und

f) das erhaltene $SnO_2$ in einem begasbaren Ofen einem reduzierendem Gasstrom ausgesetzt wird.

Gegenstand der Erfindung ist daher ein Elektrolyt für nichtwässrige elektrochemische Zellen, bevorzugt für sekundäre Lithiumbatterien, der durch die Zugabe spezieller Additive die Performance, wie z.B. die Minimierung der Ausbildung eines LiF-Films mit entsprechender Verringerung der Impedanz, verbessert.
Nachfolgend wird ein allgemeines Beispiel der Erfindung näher erläutert.

Untersuchung der Löslichkeit von Lithiumfluorid

Zu einem Lösungsmittelgemisch, ausgewählt aus der Gruppe EC, DMC, PC, DEC, EC, PC, BC, VC, Cyclopentanone, Sulfolane, DMS, 3-Methyl-1,3-oxazolidine-2-on, DMC, DEC, γ-Butyrolacton, EMC, MPC, BMC, EPC, BEC, DPC, 1,2-Diethoxymethan, THF, 2-Methyltetrahydrofuran, 1,3-Dioxolan, Methylacetat, Ethylacetat und deren Mischungen, werden 0,01 bis 10 Gew.-% LiF, auf den Elektrolyten bezogen, gegeben. Die Suspension wird bei Raumtemperatur gerührt.
Zum Vergleich wird parallel die gleiche Lösung mit 0,01 bis 10 Gew.-%, bevorzugt mit 0,1 bis 5 Gew.-%, Silanen der Formel (I)

$$SiR^1R^2R^3R^4 \qquad (I)$$

worin

$R^1$-$R^4$ H, $C_yF_{2y+1-z}H_z$, $OC_yF_{2y+1-z}H_z$, $OC(O)C_yF_{2y+1-z}H_z$, $OSO_2C_yF_{2y+1-z}H_z$.

mit $1 \leq x < 6$, $1 \leq y \leq 8$ und $0 \leq z \leq 2y+1$ und
$R^1$-$R^4$ gleich oder verschieden
die Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, hat oder
die Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können, versetzt. Besonders bevorzugt werden Silanverbindungen, ausgewählt aus der Gruppe Tetramethoxysilan, Ethyltriacetoxysilan, Diphenylmethoxysilan, Difluordiphenylsilan und Triethylsilylfluormethansulfonat verwendet. Die Suspension wird bei Raumtemperatur gerührt.
Die Silane vermögen unterschiedlich stark Lithiumfluorid zu lösen.
Die nachfolgenden Beispiele sollen die Erfindung näher erläutern, ohne sie jedoch zu beschränken.

Beispiele

Beispiel 1

Löslichkeit von LiF in EC mit und ohne Si-Additiv

Zu 500 ml EC/DMC (1:1) werden 0,5 bzw. 1,0 mol/l LiF gegeben. Diese Suspensionen wird 24 h bei Raumtemperatur gerührt. In beiden Fällen wird keine Auflösung von LiF beobachtet.
Zur Bestimmung des Einflusses von Silanverbindungen werden die Experimente wiederholt, mit dem Unterschied, daß jeweils äquimolare Mengen des Silans zugegeben werden. Tabelle 1 stellt die erhaltenen Ergebnisse zusammen.

Tabelle 1

| **Silanverbindungen** | **0,5 mol/l LiF** | **1,0 mol/l LiF** |
|---|---|---|
| Tetramethoxysilan | + | o |
| Ethyltriacetoxysilan | ++ | + |
| Diphenylmethoxysilan | ++ | + |
| Difluordiphenylsilan | ++ | ++ |
| Triethylsilylfluormethan-sulfonat | ++ | ++ |
| o: leichter Bodensatz +: kein Bodensatz<br>++: kein Bodensatz, LiF wird schnell gelöst | | |

Ethyltriacetoxysilan, Diphenylmethoxysilan, Difluordiphenylsilan und Triethylsilylfluormethansulfonat sind in der Lage LiF zu lösen, wobei Difluordiphenylsilan und Triethylsilylfluormethansulfonat besonders gut geeignet sind.

Beispiel 2

Oxidationsstabilität der Silane

In der Meßzelle mit Platinarbeitselektrode, Lithiumgegenelektrode und Lithiumreferenzelektrode werden jeweils 5 Zyklovoltammogramme hintereinander aufgenommen. Hierzu wird ausgehend vom Ruhepotential das Potential zuerst mit einer Vorschubgeschwindigkeit von 10 mV/s auf 6,0 V gegen $Li/Li^+$ erhöht und im weiteren Verlauf zurück auf das Ruhepotential gefahren.

Als Elektrolyt wird eine 1 molare Lösung von $LiPF_6$ in EC/DMC verwendet, die jeweils 5% Silanadditive enthält. Tabelle 2 stellt die erhaltenen Ergebnisse zusammen. Abbildung 1 zeigt das erhaltene Zyklovotammogramm mit Ethyltriacetoxysilan als Additiv.

Tabelle 2

| **Silanverbindung** | **$E_{ox}$ gegen $Li/Li^+$** |
|---|---|
| Tetramethoxysilan | 4,4 V |
| Ethyltriacetoxysilan | 5,3 V |
| Diphenylmethoxysilan | 4,8 V |
| Difluordiphenylsilan | 5,5 V |
| Triethylsilylfluormethansulfonat | 5,2 V |
| Alle Silane weisen eine für den Einsatz in elektrochemischen Zellen ausreichende Stabilität auf. | |

Beispiel 3

Zyklisierbarkeit von Graphit und $LiMn_2O_4$ in silanhaltigen Elektrolyten

In Halbzellen mit Lithium-Gegenelektrode und Graphit bzw. $LiMn_2O_4$-Arbeitselektrode wurden bei Raumtemperatur und bei 60°C Zyklisierexperimente unter galvanostatischen Bedingungen durchgeführt.

Hierzu wurde zu einem Elektrolyten bestehend aus 1 mol/l $LiPF_6$ in EC:DEC:DMC (2:1:2) 1% des jeweiligen Silan-Additivs gegeben.

Abbildungen 2-7 zeigen die, bei 60°C, erhaltenen Ergebnisse der Zyklentests, wobei Abbildung 2 und 3 die Ergebnisse der Additivfreien Elektrolyten als Referenz zeigen.

Durch Zugabe von Silanen kann die Zyklisierbarkeit der Elektroden sowohl in Bezug auf die Zyklenausbeute als auch auf die Zyklenstabilität verbessert werden kann.

Abbildung 2: 1 mol/l $LiPF_6$ in EC:DEC:DMC= 2:1:2, Graphitelektrode, 60°C (Referenz I)

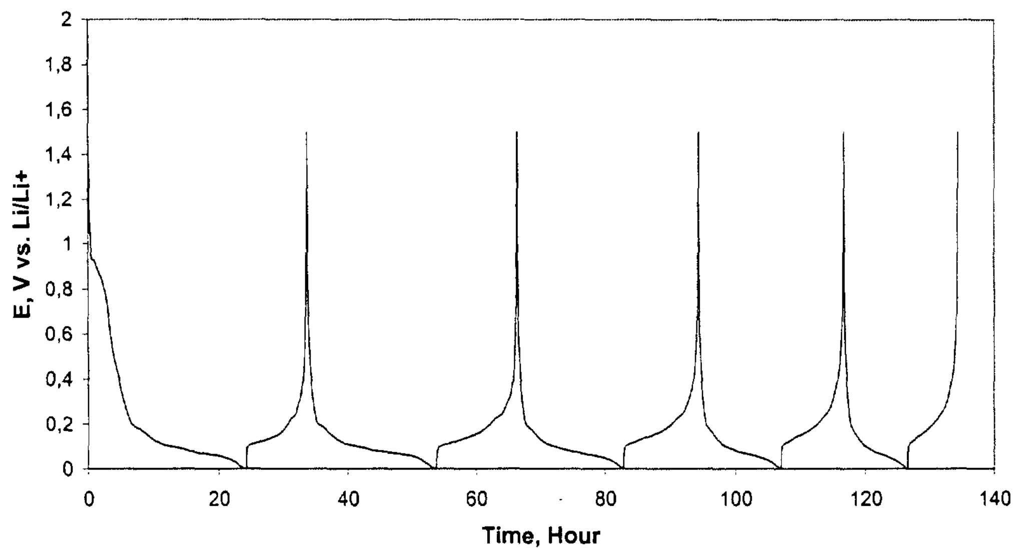


Abbildung 3: 1 mol/l $LiPF_6$ in EC:DEC:DMC= 2:1:2, $LiMn_2O_4$-Elektrode, 60°C (Referenz II)

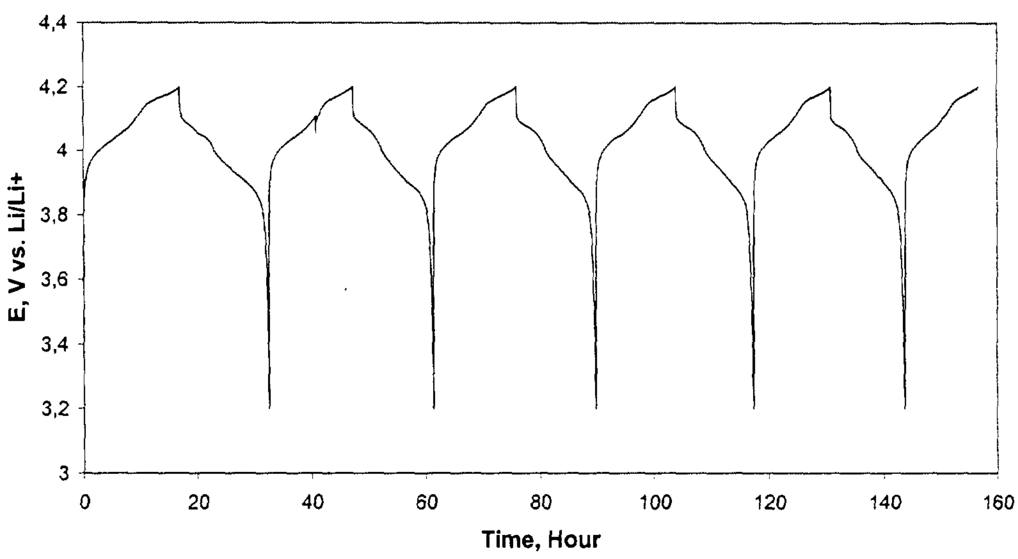

Abbildung 4: 1 mol/l $LiPF_6$ in EC:DEC:DMC= 2:1:2 +1% Tetramethoxysilan, Graphitelektrode, 60°C

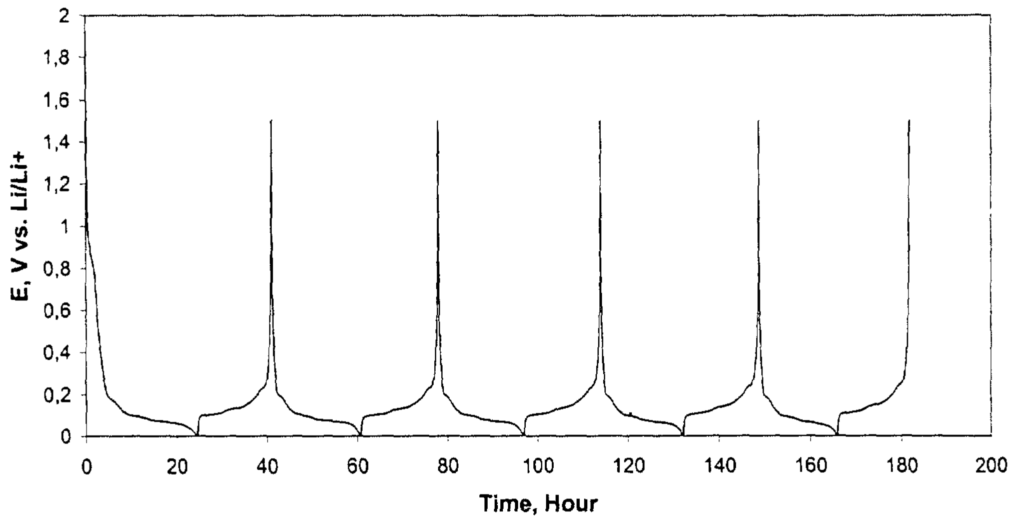


Abbildung 5: 1 mol/l $LiPF_6$ in EC:DEC:DMC= 2:1:2 +1% Tetramethoxysilan, $LiMn_2O_4$-Elektrode, 60°C

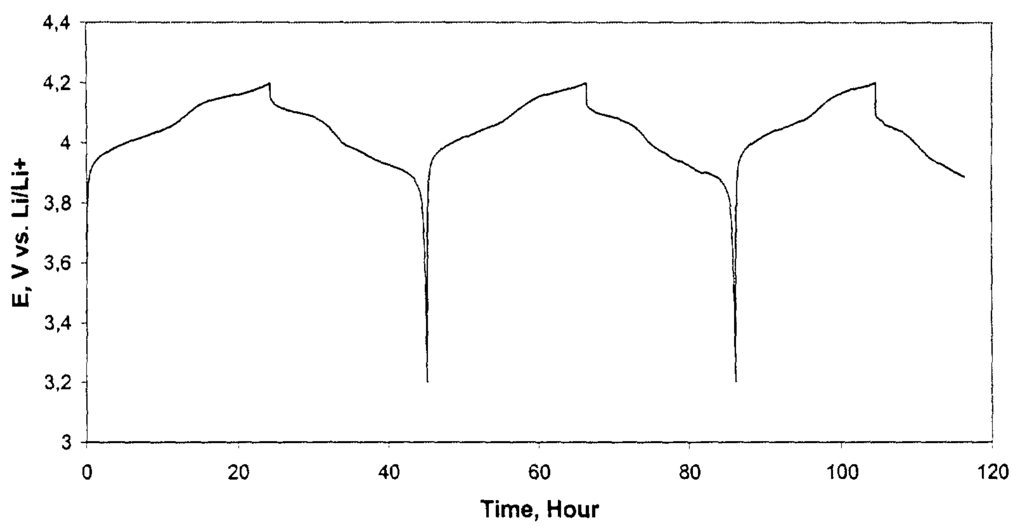

Abbildung 6: 1 mol/l $LiPF_6$ in EC:DEC:DMC= 2:1:2 +1% Ethyltriacetoxysilan, Graphitelektrode, 60°C

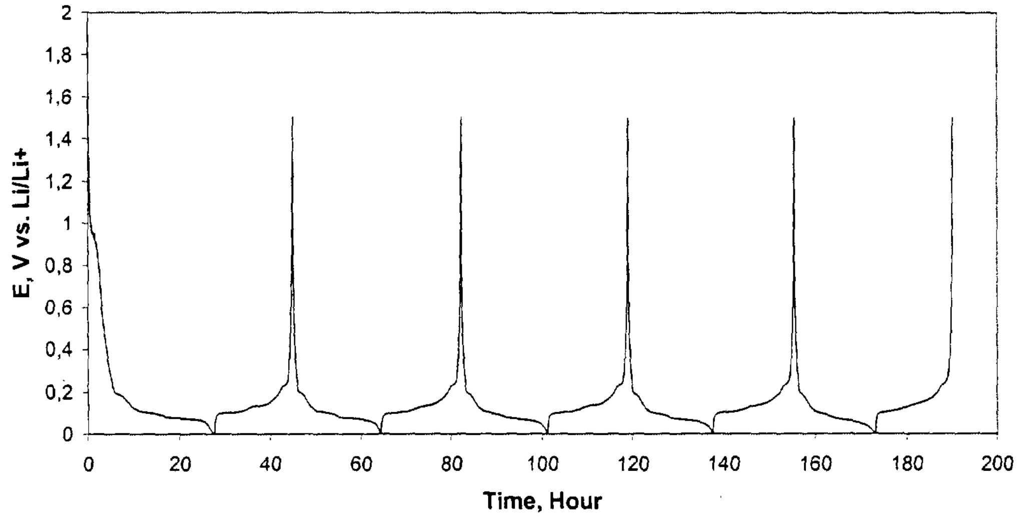


Abbildung 7: 1 mol/l $LiPF_6$ in EC:DEC:DMC= 2:1:2, 1% Ethyltriacetoxysilan, $LiMn_2O_4$-Elektrode, 60°C

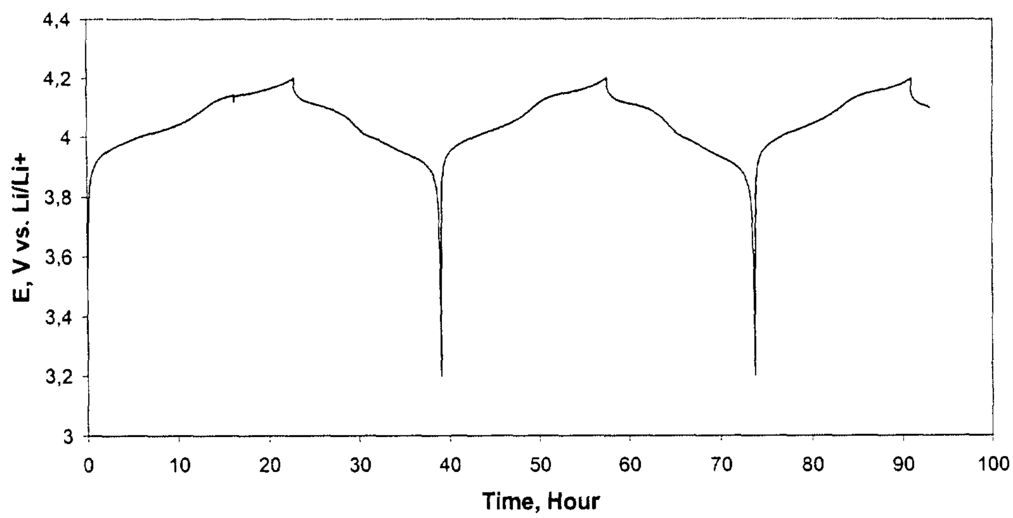


**Patentansprüche**

1. Elektrolyt, bestehend aus einem in aprotischen Lösungsmitteln gelösten lithiumhaltigen anorganischen Leitsalz oder lithiumhaltigen organischen Leitsalz, **dadurch gekennzeichnet, daß** er mindestens eine Silanverbindung als Additiv enthält.

2. Elektrolyt gemäß Anspruch 1, **dadurch gekennzeichnet, daß** die Additive aus der Gruppe der vierfach koordinierten Silanverbindungen sind.

3. Elektrolyt gemäß der Ansprüche 1 oder 2, **dadurch gekennzeichnet, daß** die Additive Silanverbindungen der

allgemeinen Formel

$$SiR^1R^2R^3R^4 \qquad (I)$$

sind

mit $R^1$ bis $R^4$ H $C_yF_{2y+1-z}H_z$ $OC_yF_{2y+1-z}H_z$ $OC(O)C_yF_{2y+1-z}H_z$ $OSO_2C_yF_{2y+1-z}H_z$

und

$1 \leq x < 6$
$1 \leq y \leq 8$ und
$0 \leq z \leq 2y+1$

und
$R^1$-$R^4$ gleich oder verschieden
mit der Bedeutung eines aromatischen Rings aus der Gruppe Phenyl, Naphthyl der unsubstituiert oder ein- oder mehrfach durch F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein kann, oder
mit der Bedeutung eines heterocyclischen aromatischen Rings aus der Gruppe Pyridyl, Pyrazyl oder Pyrimidyl, die jeweils ein- oder mehrfach mit F, $C_yF_{2y+1-z}H_z$ oder $OC_yF_{2y+1-z}H_z$, $OC(O)C_yF_{2y+1-z}H_z$, $OSO_2C_yF_{2y+1-z}H_z$, $N(C_nF_{2n+1-z}H_z)_2$ substituiert sein können.

4. Elektrolyt gemäß der Ansprüche 1 bis 3, **dadurch gekennzeichnet, daß** die Additive ausgewählt sind aus der Gruppe: Tetramethoxysilan, Ethyltriacetoxysilan, Diphenylmethoxysilan, Difluordiphenylsilan und Triethylsilylfluormethansulfonat.

5. Elektrolyt gemäß den Ansprüchen 1 bis 4, **dadurch gekennzeichnet, daß** die Additive in Konzentrationen zwischen 0,01 und 10 Gew.-% im Elektrolyten enthalten sind.

6. Elektrolyt gemäß den Ansprüchen 1 bis 5, **dadurch gekennzeichnet, daß** die Additive in Konzentrationen zwischen 0,1 und 5 Gew.-% im Elektrolyten enthalten sind.

7. Elektrochemische Zelle bestehend aus Kathode, Anode, Separator und Elektrolyt, **dadurch gekennzeichnet, daß** sie einen Elektrolyten gemäß der Ansprüche 1 bis 6 enthält.

8. Verwendung von Silanverbindungen als Additiv in elektrochemischen Zellen, Batterien und sekundären Lithiumbatterien.

9. Verwendung von Silanverbindungen der Formel

$$SiR^1R^2R^3R^4 \qquad (I)$$

worin $R^1$, $R^2$, $R^3$ und $R^4$ die angegebene Bedeutung haben, als Additiv in elektrochemischen Zellen, Batterien und sekundären Lithiumbatterien.

10. Verwendung von Silanverbindungen gemäß Anspruch 8 oder 9 zum Lösen von Lithiumfluorid.

11. Verwendung von Silanverbindungen gemäß Anspruch 8 oder 9 in Kombination mit anderen Lithiumsalzen.

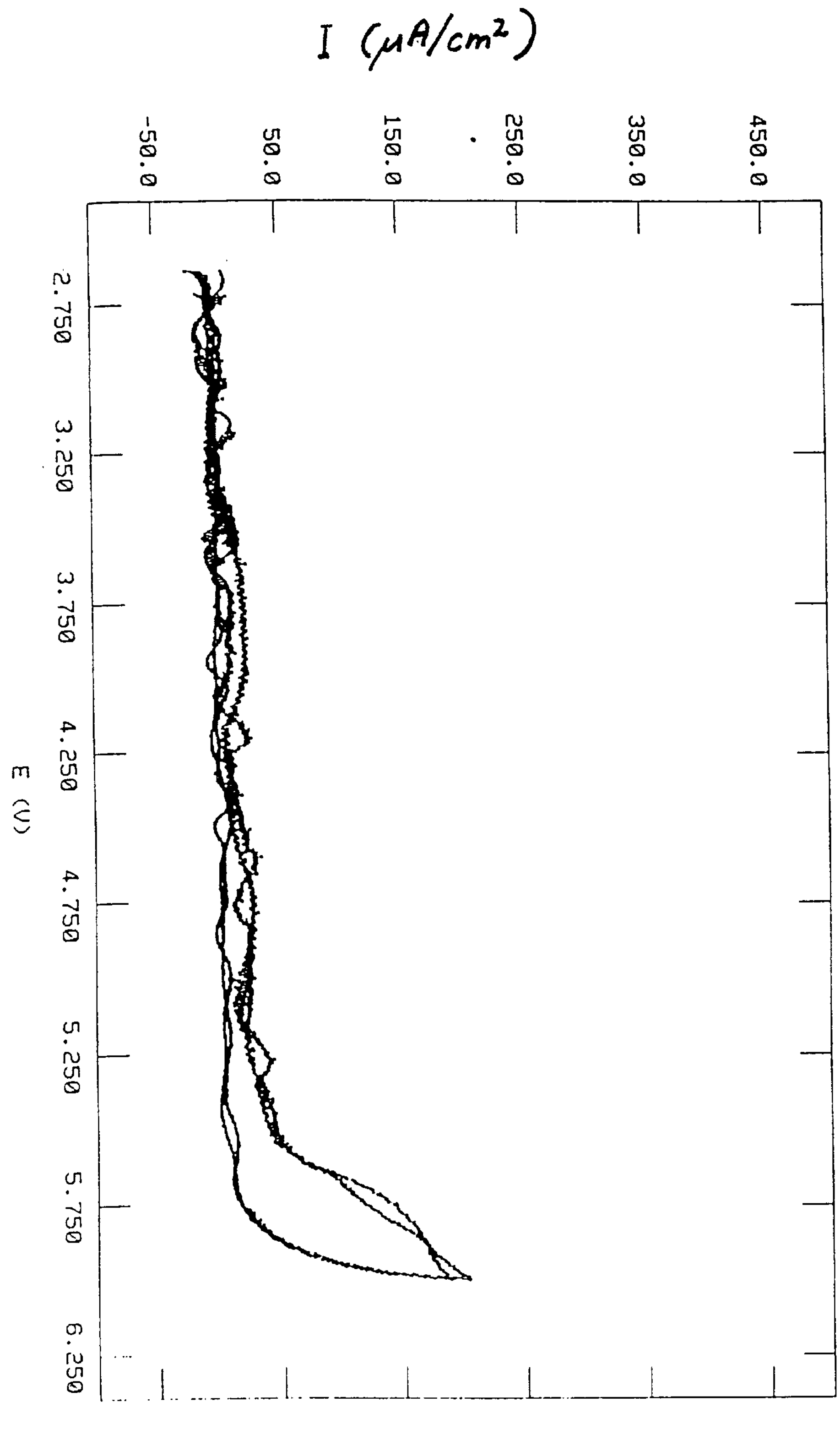
I (μA/cm²)
-50.0
50.0
150.0
250.0
350.0
450.0
2.750
3.250
3.750
4.250
4.750
5.250
5.750
6.250
E (V)

Abbildung 1

Europäisches Patentamt

# EUROPÄISCHER RECHERCHENBERICHT

Nummer der Anmeldung
EP 01 11 1125

| EINSCHLÄGIGE DOKUMENTE | | | |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
| X | US 5 830 600 A (DOUGHERTY BRIAN J ET AL) 3. November 1998 (1998-11-03)<br>* Spalte 3, Zeile 24-30 *<br>* Spalte 4, Zeile 38-53 *<br>* Spalte 9, Zeile 18-36 *<br>* Spalte 10, Zeile 18-40 *<br>* Spalte 12, Zeile 37-51 *<br>* Spalte 21, Zeile 63 - Spalte 22, Zeile 6 *<br>* Ansprüche 1,4,7 *<br>--- | 1-4,7-9, 11 | H01M10/40 |
| X | PATENT ABSTRACTS OF JAPAN<br>vol. 012, no. 069 (E-587),<br>3. März 1988 (1988-03-03)<br>& JP 62 211873 A (HITACHI MAXELL LTD),<br>17. September 1987 (1987-09-17)<br>* Zusammenfassung *<br>--- | 1,2,5-8, 11 | |
| D,X | PATENT ABSTRACTS OF JAPAN<br>vol. 1997, no. 04,<br>30. April 1997 (1997-04-30)<br>-& JP 08 321311 A (SANYO ELECTRIC CO LTD),<br>3. Dezember 1996 (1996-12-03)<br>* Zusammenfassung *<br>--- | 1-9,11 | RECHERCHIERTE SACHGEBIETE (Int.Cl.7)<br>H01M |
| X | PATENT ABSTRACTS OF JAPAN<br>vol. 1999, no. 12,<br>29. Oktober 1999 (1999-10-29)<br>& JP 11 195428 A (TOYOTA CENTRAL RES &DEV LAB INC),<br>21. Juli 1999 (1999-07-21)<br>* Zusammenfassung *<br>---<br>-/-- | 1-4,7-9, 11 | |

Der vorliegende Recherchenbericht wurde für alle Patentansprüche erstellt

| Recherchenort | Abschlußdatum der Recherche | Prüfer |
|---|---|---|
| DEN HAAG | 20. September 2001 | De Vos, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie,übereinstimmendes Dokument

EPO FORM 1503 03.82 (P04C03)

Europäisches Patentamt

# EUROPÄISCHER RECHERCHENBERICHT

Nummer der Anmeldung
EP 01 11 1125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X<br><br><br><br><br>A | PATENT ABSTRACTS OF JAPAN<br>vol. 013, no. 173 (E-748),<br>24. April 1989 (1989-04-24)<br>& JP 01 003961 A (HITACHI MAXELL LTD),<br>9. Januar 1989 (1989-01-09)<br>* Zusammenfassung *<br>--- | 1-5,7-9,<br>11<br><br><br><br>10 | |
| X<br><br><br><br><br>A | PATENT ABSTRACTS OF JAPAN<br>vol. 011, no. 059 (E-482),<br>24. Februar 1987 (1987-02-24)<br>& JP 61 220279 A (TOSHIBA BATTERY CO LTD),<br>30. September 1986 (1986-09-30)<br>* Zusammenfassung *<br>--- | 1,5-8,11<br><br><br><br><br>10 | |
| X<br><br>A | US 5 458 996 A (ITOH NORIYUKI ET AL)<br>17. Oktober 1995 (1995-10-17)<br>* Spalte 1, Zeile 14 - Spalte 2, Zeile 27 *<br>--- | 1,2,5-8,<br>11<br>10 | |
| X | PATENT ABSTRACTS OF JAPAN<br>vol. 016, no. 539 (E-1289),<br>10. November 1992 (1992-11-10)<br>& JP 04 206273 A (SANYO ELECTRIC CO LTD),<br>28. Juli 1992 (1992-07-28)<br>* Zusammenfassung *<br>--- | 1,2,7,8 | RECHERCHIERTE SACHGEBIETE (Int.Cl.7) |
| X | PATENT ABSTRACTS OF JAPAN<br>vol. 018, no. 221 (E-1540),<br>20. April 1994 (1994-04-20)<br>& JP 06 020705 A (HITACHI MAXELL LTD),<br>28. Januar 1994 (1994-01-28)<br>* Zusammenfassung *<br>--- | 1,2,7-9 | |
| P,X | EP 1 095 942 A (MERCK PATENT GMBH)<br>2. Mai 2001 (2001-05-02)<br>* Seite 7, Zeile 23-46; Ansprüche 1-6 *<br>---<br>-/-- | 1-11 | |

Der vorliegende Recherchenbericht wurde für alle Patentansprüche erstellt

| Recherchenort | Abschlußdatum der Recherche | Prüfer |
|---|---|---|
| DEN HAAG | 20. September 2001 | De Vos, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)

Europäisches Patentamt

# EUROPÄISCHER RECHERCHENBERICHT

Nummer der Anmeldung
EP 01 11 1125

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| P,X | PATENT ABSTRACTS OF JAPAN<br>vol. 2000, no. 20,<br>10. Juli 2001 (2001-07-10)<br>& JP 2001 068153 A (NGK INSULATORS LTD),<br>16. März 2001 (2001-03-16)<br>* Zusammenfassung *<br>--- | 1,6,7 | |
| A | PATENT ABSTRACTS OF JAPAN<br>vol. 2000, no. 03,<br>30. März 2000 (2000-03-30)<br>& JP 11 354104 A (DENSO CORP),<br>24. Dezember 1999 (1999-12-24)<br>* Zusammenfassung *<br>--- | 1-4 | |
| A | PATENT ABSTRACTS OF JAPAN<br>vol. 1999, no. 11,<br>30. September 1999 (1999-09-30)<br>& JP 11 162508 A (CANON INC),<br>18. Juni 1999 (1999-06-18)<br>* Zusammenfassung *<br>----- | 1-11 | |
| | | | RECHERCHIERTE SACHGEBIETE (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 20. September 2001 | De Vos, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 01 11 1125

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-09-2001

| Im Recherchenbericht angeführtes Patentdokument | Datum der Veröffentlichung | Mitglied(er) der Patentfamilie | Datum der Veröffentlichung |
|---|---|---|---|
| US 5830600 A | 03-11-1998 | CN 1220029 A | 16-06-1999 |
| | | EP 0906641 A1 | 07-04-1999 |
| | | WO 9744842 A1 | 27-11-1997 |
| JP 62211873 A | 17-09-1987 | KEINE | |
| JP 08321311 A | 03-12-1996 | KEINE | |
| JP 11195428 A | 21-07-1999 | KEINE | |
| JP 01003961 A | 09-01-1989 | JP 2074159 C | 25-07-1996 |
| | | JP 7101610 B | 01-11-1995 |
| JP 61220279 A | 30-09-1986 | KEINE | |
| US 5458996 A | 17-10-1995 | JP 7220736 A | 18-08-1995 |
| | | JP 7320745 A | 08-12-1995 |
| JP 04206273 A | 28-07-1992 | JP 3011455 B2 | 21-02-2000 |
| JP 06020705 A | 28-01-1994 | KEINE | |
| EP 1095942 A | 02-05-2001 | DE 19951804 A1 | 03-05-2001 |
| | | BR 0005121 A | 29-05-2001 |
| | | CN 1308079 A | 15-08-2001 |
| | | EP 1095942 A2 | 02-05-2001 |
| | | JP 2001155769 A | 08-06-2001 |
| JP 2001068153 A | 16-03-2001 | KEINE | |
| JP 11354104 3 A | | KEINE | |
| JP 11162508 3 A | | KEINE | |

EPO FORM P0461

Für nähere Einzelheiten zu diesem Anhang : siehe Amtsblatt des Europäischen Patentamts, Nr.12/82